# EUROPÄISCHE PATENTSCHRIFT

(11) **EP 0 867 264 B1**
(45) Veröffentlichungstag und Bekanntmachung des Hinweises auf die Patenterteilung: **07.08.2002**
(21) Anmeldenummer: 98104348.2
(22) Anmeldetag: 11.03.1998
(51) Int. Cl.: B27D 1/06

(54) **Anlage zum ausgerichteten Zuführen von Füllstreifen aus Dämmmaterial im Zuge der Fertigung von Sandwichelementen**
Apparatus for feeding insulating filler material during the production of sandwich boards
Installation pour l'alimentation de bandes isolantes pendant la fabrication de panneaux sandwich

(30) Priorität: 26.03.1997 DE 19712698
(43) Veröffentlichungstag der Anmeldung: 30.09.1998
(73) Patentinhaber: Siempelkamp Handling Systeme GmbH & Co., 82515 Wolfratshausen (DE)
(72) Erfinder:
(74) Vertreter: Honke, Manfred, Dr.-Ing.

(56) Entgegenhaltungen:
- CH-A- 465 839
- DE-A- 2 201 653
- DE-A- 3 329 712
- DE-A- 4 309 485
- FR-A- 2 232 484
- GB-A- 2 084 531
- US-A- 3 554 353

## Beschreibung

Die Erfindung betrifft eine Anlage zum ausgerichteten Zuführen von Füllstreifen aus Dämmaterial im Zuge der Fertigung von Sandwichelementen, insbesondere Wand- oder Deckenelementen, aus Deckschichten und einem Füllstreifenkern, mit einem Füllstreifenzuförderer und einem Füllstreifenabförderer. - Bei den Sandwichelementen handelt es sich um Plattenelemente, deren Deckschichten regelmäßig als Metallplatten ausgeführt sind und deren Füllstreifenkern aus versetzt zueinander angeordneten Füllstreifen besteht, deren Faserrichtung im wesentlichen senkrecht zu den Deckschichten und folglich zur Oberfläche verläuft, um eine hinreichende Festigkeit und insbesondere Widerstandsfähigkeit zu erreichen. Bei dem Dämmaterial handelt es sich im allgemeinen um Mineralfaserwolle, Glasfaserwolle, geschäumten Kunststoff, wie beispielsweise PU-Schaum, o. dgl.

Es ist z.B ein Verfahren aus der DE-A-3 329 712 bereits bekannt, nach dem Mineralfaserbahnen in Längsrichtung durch ein Sägegatter aufgeteilt und die entstandenen Füllstreifen in schraubenförmig verlaufenden Führungskanälen um 90° gedreht und dann zu einer Mineralfaserplatte zusammengeführt werden. Derartige Maßnahmen sind jedoch unbefriedigend, da beim Drehen der Füllstreifen in den Führungskanälen infolge der damit verbundenen Reibung erheblicher Verschleiß und stockender Transport in Kauf genommen werden müssen. Nach einem anderen bekannten Verfahren werden Mineralfaserplatten einer Trennvorrichtung mit einer senkrechten Messerwelle mit kreisförmigen Messern hochkant zugeführt und die nach dem Schneiden in horizontaler Ebene übereinanderliegenden Füllstreifen über bogenförmige Führungselemente aus ihrer Vertikalposition in eine Horizontalposition überführt. Zum Auseinanderfächern der in Vertikalposition übereinanderliegenden Führungsstreifen ist eine Schar gleich großer gebogener Führungskanäle vorgesehen, die so gestaffelt sind, daß deren Einlaßöffnungen übereinanderliegen, während die Auslaßöffnungen um ihre Breite gegeneinander versetzt angeordnet sind. Das Ausgleichen des Höhenunterschiedes der bogenförmigen Führungskanäle wird durch in der horizontalen Ebene gerade und in der vertikalen Ebene in Kurvenlinien verlaufende Führungskanäle bewirkt. Auch in diesem Fall müssen infolge der auftretenden Reibung erhebliche Verschleißerscheinungen und stockender Transport in Kauf genommen werden. Außerdem stört die Instabilität der hochkant und folglich in Standposition antransportierten und in Füllstreifen zu schneidenden Mineralfaserplatten.

Der Erfindung liegt die Aufgabe zugrunde, eine Anlage zu schaffen, welche das ausgerichtete Zuführen von Füllstreifen in betrieblicher und rationeller Weise auf automatischem Wege für eine kontinuierliche Fertigung von Sandwichelementen gewährleistet.

Diese Aufgabe löst die Erfindung bei einer gattungsgemäßen Anlage dadurch, daß zwischen dem Füllstreifenzuförderer und dem Füllstreifenabförderer ein Selektierförderer zwischengeschaltet ist, daß der Selektierförderer umlaufende Fächer zur Aufnahme einzelner Füllstreifen aufweist und jedes Fach am Fördereranfang zum 90°-Hochschwenken eines in Horizontallage antransportierten Füllstreifens in Vertikalposition eingerichtet ist, und daß unterhalb des Selektierförderers ein Hubrollenförderer mit orthogonal zur Laufrichtung des Selektierförderers angeordneten und über die Fachbodenebene im Obertrum des Selektierförderers anhebbaren und angetriebenen Transportrollen angeordnet ist, welche bei stillstehendem Selektierförderer die in seinen Fächern befindlichen Füllstreifen aufnehmen und in Richtung auf den Füllstreifenabförderer abtransportieren. - Diese Maßnahmen der Erfindung haben zur Folge, daß das Wenden der Füllstreifen um 90° und deren Ausrichtung mittels eines Selektierförderers erfolgt, wobei aus der ursprünglichen Streifenbreite die spätere Streifenhöhe und folglich Elementendicke der Sandwichelemente entsteht, und zwar unter Berücksichtigung der Tatsache, daß danach die Faserrichtung im wesentlichen senkrecht zur Oberfläche angeordnet ist und dadurch besonders widerstandsfähige Sandwichelemente mit hoher Festigkeit entstehen. Dabei gelingt das Wenden bzw. Drehen der Füllstreifenelemente um 90° und deren Ausrichtung im automatischen Betrieb und ohne den Einsatz von bogenförmigen oder schraubenförmigen Führungskanälen und folglich den daraus resultierenden Transportschwierigkeiten.

Weitere erfindungswesentliche Merkmale sind im folgenden aufgeführt. So können die Fächer des Selektierförderers von Fachwänden gebildet sein, die an beidseitig des Selektierförderers umlaufenden und angetriebenen Kettensträngen angeschlossen sind und sich im Übergangsbereich vom Untertrum in das Obertrum unter Aufnahme der Füllstreifen aufrichten. Die Füllstreifen werden also gleichsam in Horizontallage im Übergangsbereich Untertrum/Obertrum an die Fachwände übergeben und dann mit den sich aufrichtenden Fachwänden um 90° gedreht. In diesem Zusammenhang und nach einem besonderen Vorschlag sieht die Erfindung vor, daß dem Selektierförderer zwei oder mehrere Riemenförderer mit derart aufeinander abstimmbaren Fördergeschwindigkeiten vorgeordnet sind, daß der letzte Riemenförderer vor dem Selektierförderer die in Horizontal- und Querlage befindlichen Füllstreifen mit gleichem Abstand von Vorderkante zu Vorderkante dem Selektierförderer bzw. seinen Fächern im Übergangsbereich vom Untertrum zum Obertrum zuliefert. Die Fördergeschwindigkeit der Riemenförderer wird in Abhängigkeit von der Breite der Füllstreifen aufeinander abgestimmt, wobei eine Selektierung bereits durch die unterschiedlichen Geschwindigkeiten stattfindet. Erfindungsgemäß sind im Übergabebereich zwischen dem letzten und vorletzten Riemenförderer ein oder mehrere in vorgegebenen Abständen zueinander angeordnete, gegen die Fördererebene niederfahrbare Anschläge vorgesehen, wobei bei niedergefahrenen Anschlägen eine für das nächste Selektieren und Beschicken des Selektierförderers ausreichende Anzahl von Füllstreifen in ausgerichteter Horizontal- bzw. Querlage dicht bei dicht und folglich ohne Zwischenraum aufgestaut wird. Die Anschläge können mittels Zylinderkolbenanordnungen niederfahrbar und in Ausgangsstellung hochfahrbar sein, wobei die Zylinderkolbenanordnungen auf einer den betreffenden Riemenförderer überbrückenden Traverse angeordnet sind. Um die Übergabeverhältnisse von dem letzten Riemenförderer an den Selektierförderer zu verbessern, sind zweckmäßigerweise oberhalb des letzten Riemenförderers und folglich vor dem Selektierförderer ein oder mehrere in vorgegebenen Abständen voneinander angeordnete Oberdruckförderer installiert, welche die Füllstreifen gegen den Riemenförderer andrücken, so daß stets eine einwandfreie Übergabe der Füllstreifen von dem Riemenförderer an den Selektierförderer gewährleistet ist. Aus Gründen einer kompakten Bauweise empfiehlt es sich, die Anschläge in den Bereichen zwischen den Oberdruckförderern anzuordnen.

Nach einem weiteren Vorschlag der Erfindung, dem selbständige Bedeutung zukommt, ist vorgesehen, daß zwischen dem Füllstreifenzuförderer und den rechtwinklig dazu angeordneten Riemenförderern eine Winkelstation zwischengeschaltet ist, daß die Winkelstation in Verlängerung des Füllstreifenzuförderers eine Rollenbahn und einen Hubrechen mit zwischen den Rollen der Rollenbahn heb- und senkbaren Auflagerprofilen für antransportierte Füllstreifen aufweist, und daß oberhalb der Winkelstation ein Abschiebeförderer mit einem oder mehreren in Richtung auf die sich an die Winkelstation anschließenden Riemenförderer umlaufenden Schiebern vorgesehen ist, welche die bei angehobenem Hubrechen auf den Auflagerprofilen oberhalb der Rollen aufliegenden Füllstreifen an den nächsten Riemenförderer abgeben. Auf diese Weise erfolgt automatisch und betriebssicher eine rechtwinklige Übergabe der Füllstreifen von dem Füllstreifenzuförderer an die dem Selektierförderer vorgeschalteten Riemenförderer, und zwar derart, daß die Füllstreifen dann dem Selektierförderer in horizontaler Querlage zugefördert werden. Für eine kontinuierliche und einwandfreie Übergabe der Füllstreifen von der Rollenbahn bzw. dem Hubrechen an den nachgeordneten Riemenförderer genügt es, wenn der Abschiebeförderer zwei um 180° versetzte Schieber aufweist.

Nach einem weiteren Vorschlag der Erfindung mit selbständiger Bedeutung ist vorgesehen, daß dem Selektierförderer eine Füllstreifenversatzerzeugerstation zum Erzeugen eines vorgegebenen Versatzes zwischen den Füllstreifen benachbarter Füllstreifenstränge nachgeordnet ist, wobei die aus dem Selektierförderer in Ausrichtung abtransportierten Füllstreifen auf Riemenbahnen eines oder mehrerer hintereinander angeordneter Riemenförderer am Ende des letzten Riemenförderers gegen niederfahrbare und hochfahrbare sowie wechselweise um ein vorgegebenes Maß zueinander versetzte Anschläge unter entsprechender Versatzbildung vorfahrbar sind. Auch der Versatz der Füllstreifen dient dazu, die Festigkeit und folglich Widerstandsfähigkeit der Sandwichelemente mit Füllstreifenkern zu erhöhen. Im Hinterkantenbereich einer eine Füllstreifenplatte bildenden Füllstreifencharge ist zweckmäßigerweise eine den betreffenden Riemenförderer überbrückende Meßschranke angeordnet, wobei mittels einer Sensorik, z. B. Lichtschranke, bei zum Endlosstrang aufgefahrenen Füllstreifen ein ausreichender oder unzureichender Füllstreifenversatz erfaßbar ist, so daß bei unzureichendem Versatz mittels z. B. eines Portalgreifers ein Korrekturstreifenabschnitt in den betreffenden Füllstreifenstrang einsetzbar ist. Eine Versatzkorrektur wird stets erst dann erforderlich, wenn die insoweit vorgegebenen Toleranzen überschritten werden. Im Ergebnis wird eine einwandfreie Versatzeinhaltung ohne Füllstreifenbearbeitung erreicht. - Die Anschläge können mittels beidseitig des letzten Riemenförderers angeordneter Zylinderkolbenanordnungen und eines von den Zylinderkolbenanordnungen betätigbaren und den Riemenförderer überbrückenden Schwenkhebelgestänges niederfahrbar und hochfahrbar sein, sind aber in diesem Sinne verschwenkbar. Zur einwandfreien Führung der Füllstreifen auf den dem Selektierförderer nachgeordneten Riemenförderern sind erfindungsgemäß den Riemenbahnen dieser Riemenförderer Trenn- und Führungswände für die Füllstreifen zugeordnet. Diese Trenn- und Führungswände können über den Riemenförderern an Traversen abgehängt und breitenverstellbar sein.

Weiter sieht die Erfindung vor, daß sich an den letzten Riemenförderer ein Bandförderer mit auf eine vorgegebene oder einstellbare Breite konisch zulaufenden Seitenwänden oder Seitenwandförderern anschließt. Bei der einstellbaren Breite handelt es sich regelmäßig um die Füllkernbreite der herzustellenden Sandwichelemente. Zwischen dem Bandförderer und dem Füllstreifenabförderer ist vorzugsweise eine Frässtation mit die zugeführte Füllstreifenplatte außenseitig auf ein vorgegebenes Breitenmaß und eben Füllstreifenkernmaß bearbeitenden Fräsaggregaten angeordnet. Dadurch lassen sich praktisch die beiden äußeren Ränder der Füllstreifenplatte bzw. des späteren Füllstreifenkerns exakt auf Maß befräsen, während die anfallenden Späne im Wege einer Absaugung entsorgt werden können.

Im folgenden wird die Erfindung anhand einer lediglich ein Ausführungsbeispiel darstellenden Zeichnung näher erläutert; es zeigen:

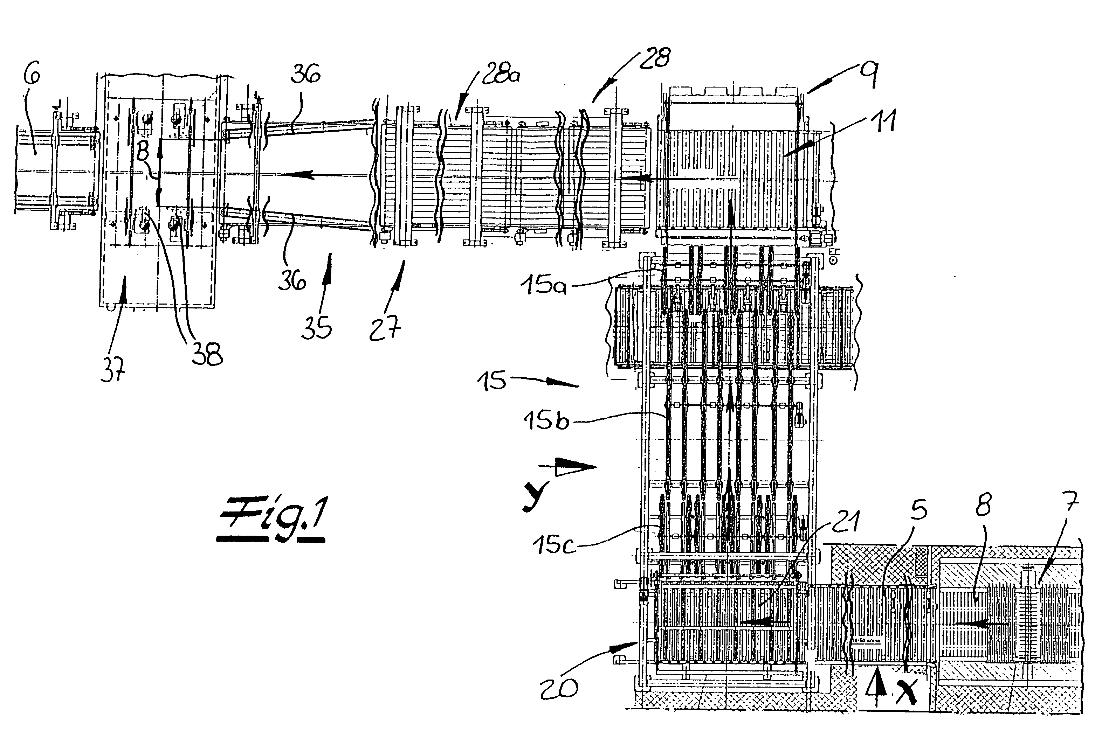

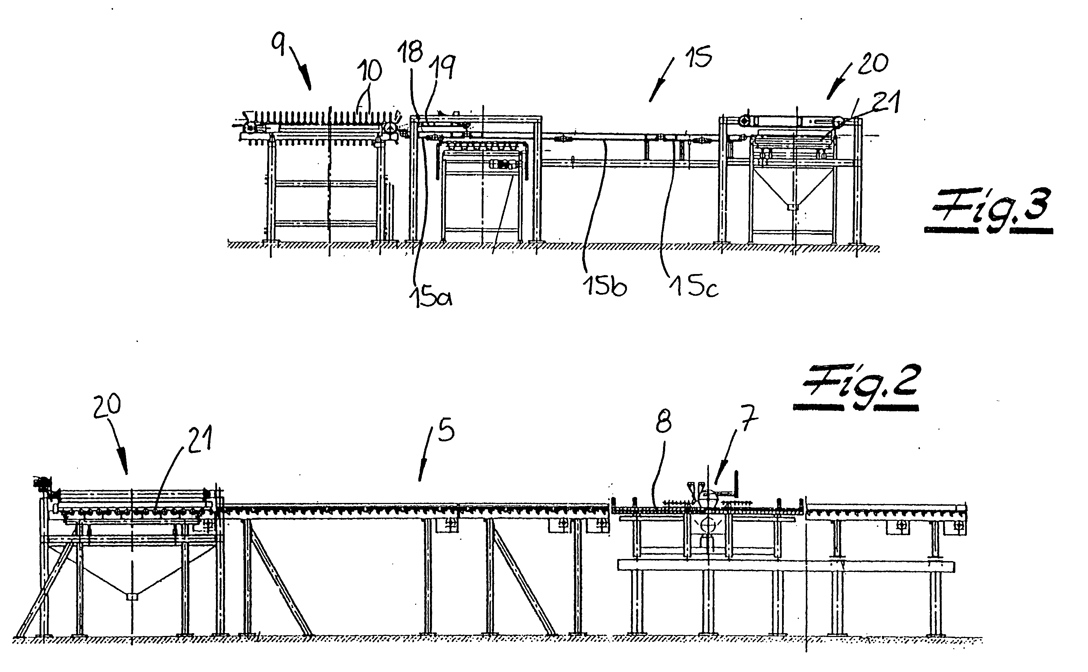

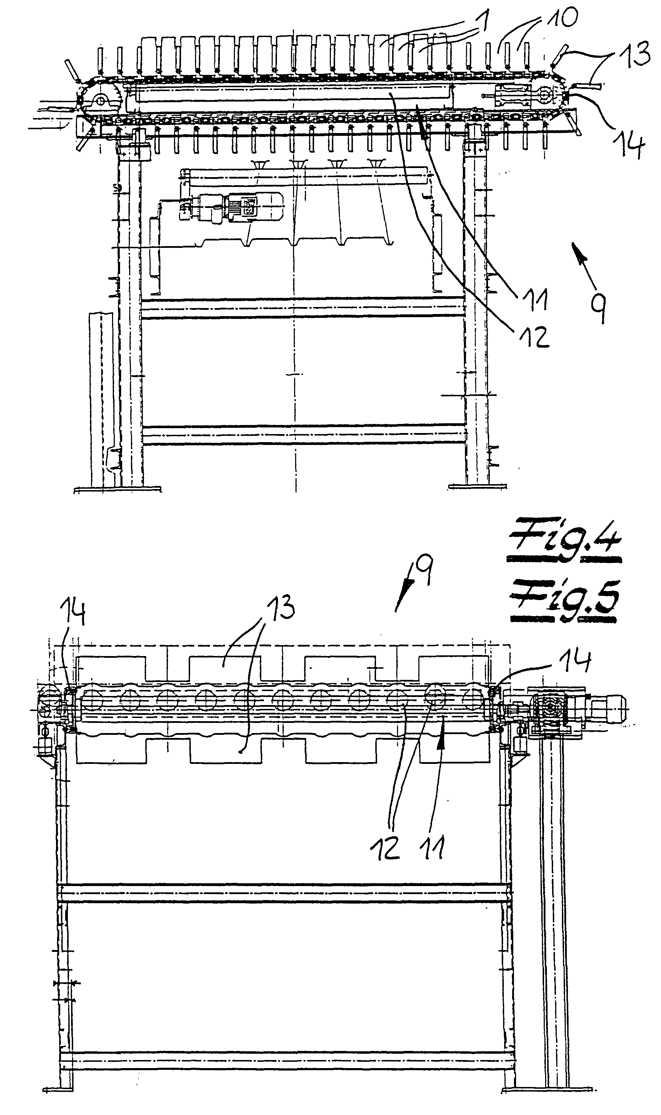

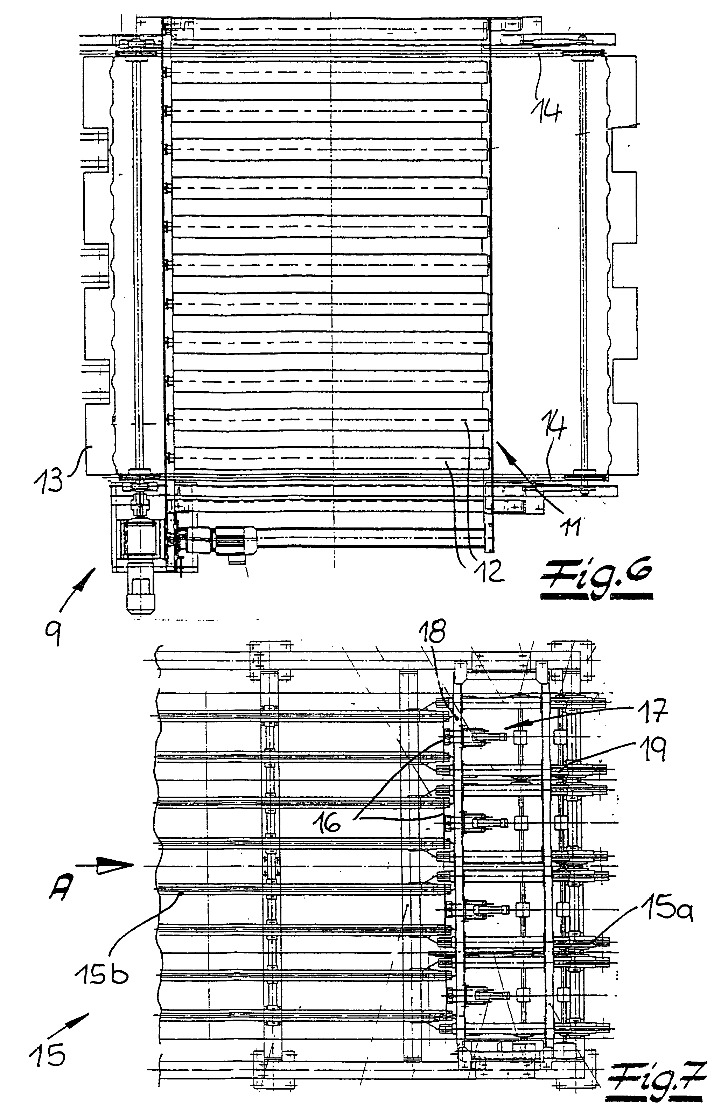

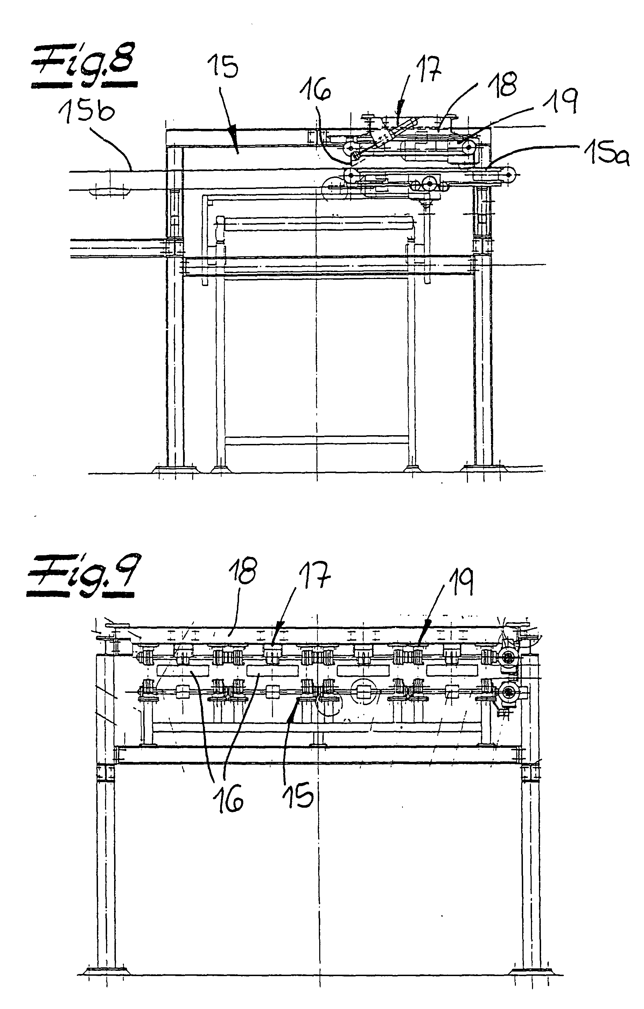

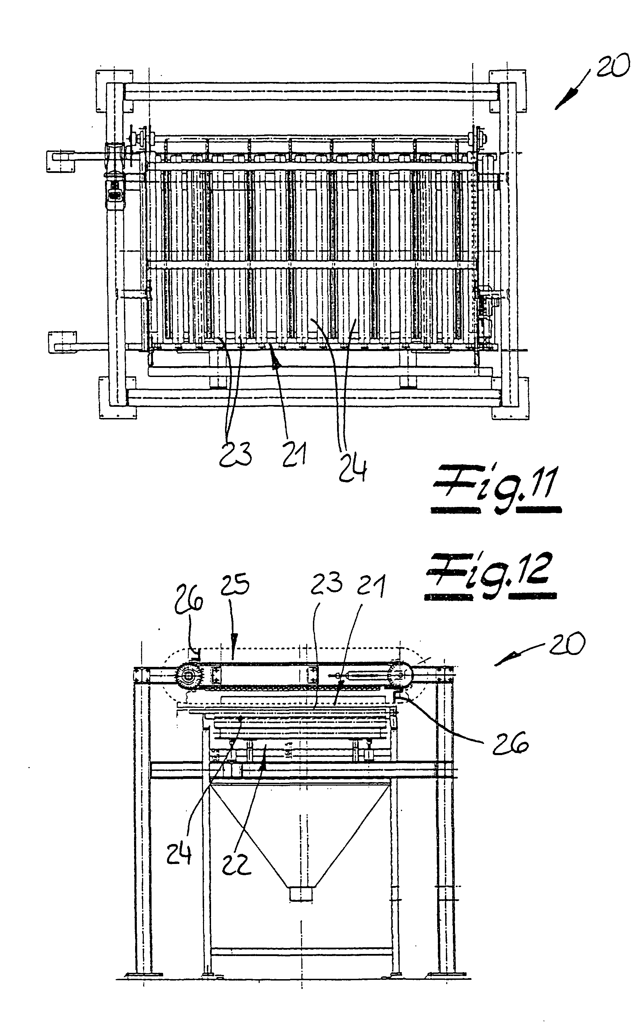

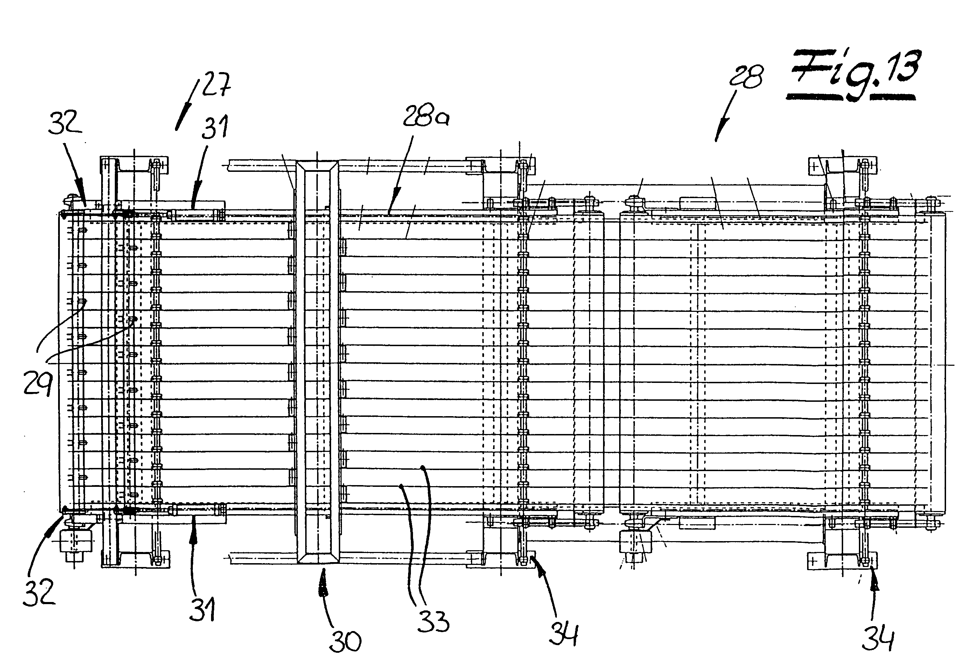

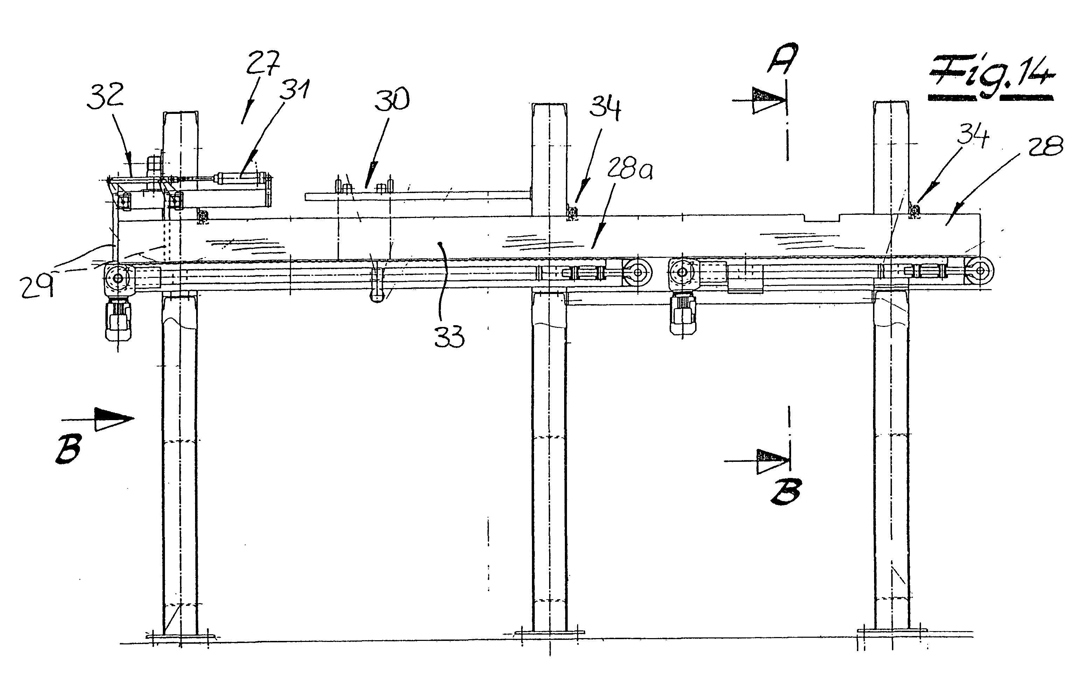

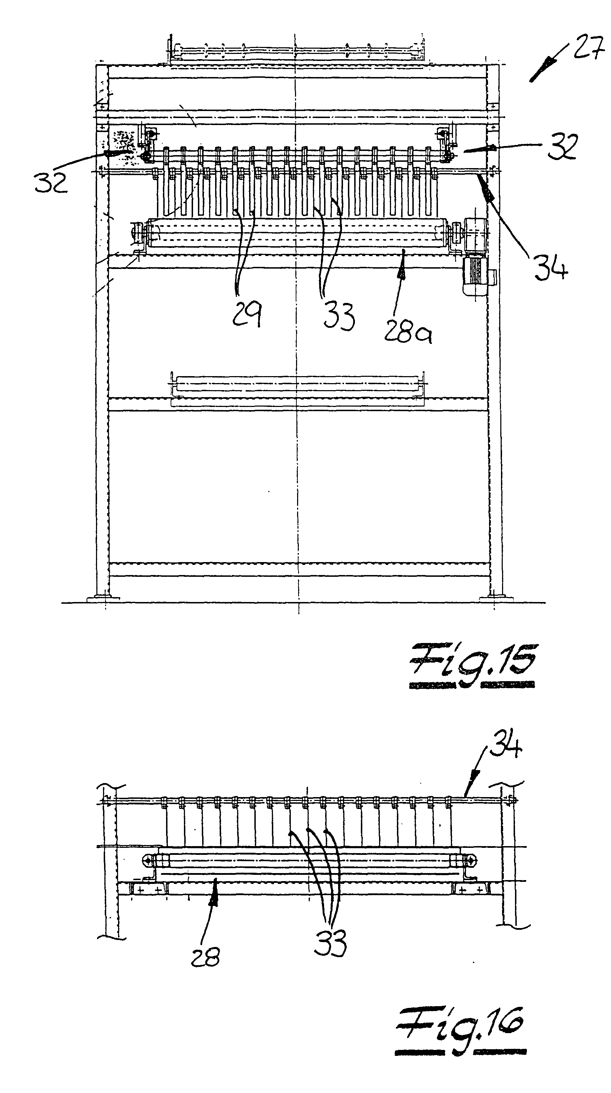

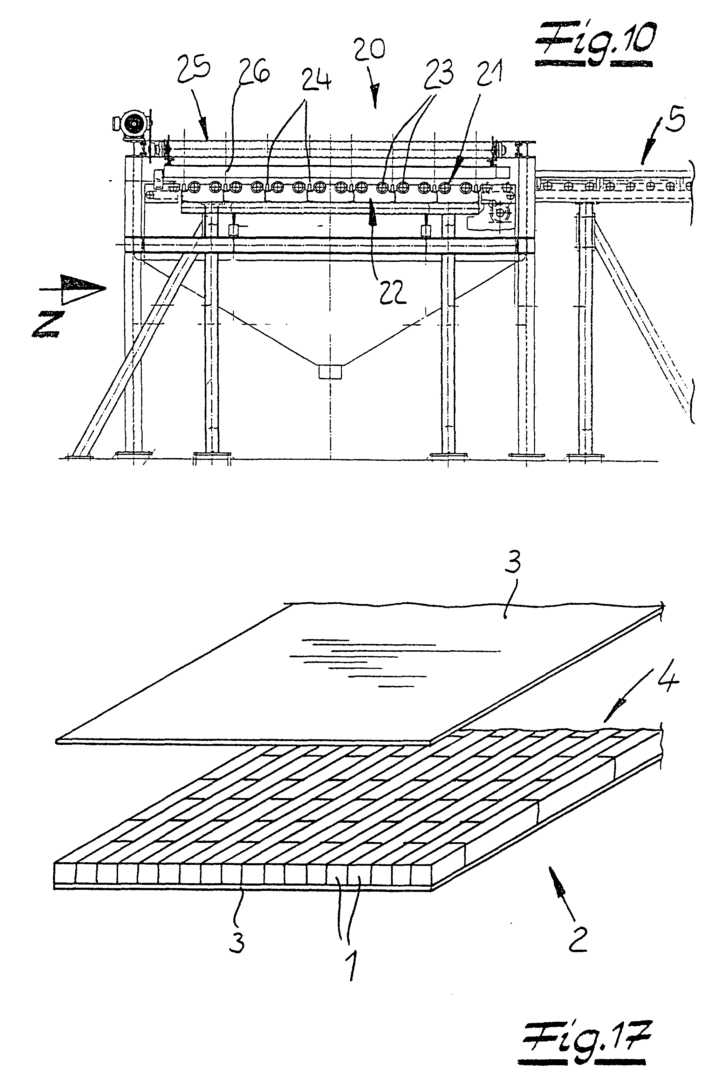

- Fig. 1: eine Anlage zum ausgerichteten Zuführen von Füllstreifen in Draufsicht,
- Fig. 2: teilweise den Gegenstand nach Fig. 1 aus Richtung des Pfeiles X,
- Fig. 3: teilweise den Gegenstand nach Fig. 1 aus Richtung des Pfeiles Y,
- Fig. 4: den Selektierförderer für den Gegenstand nach Fig. 1 in Seitenansicht,
- Fig. 5: den Gegenstand nach Fig. 4 in Frontansicht,
- Fig. 6: eine Draufsicht auf den Gegenstand nach Fig. 4 ohne Fächer,
- Fig. 7: ausschnittsweise eine Draufsicht auf dem Selektierförderer vorgeordnete Riemenförderer,
- Fig. 8: den Gegenstand nach Fig. 7 in Seitenansicht,
- Fig. 9: den Gegenstand nach Fig. 7 in Stirnansicht aus Richtung des Pfeiles A,
- Fig. 10: die Winkelstation für den Gegenstand nach Fig. 1 in Frontansicht,
- Fig. 11: eine Draufsicht auf den Gegenstand nach Fig. 10,
- Fig. 12: eine Seitenansicht auf den Gegenstand nach Fig. 10 in Richtung des Pfeiles Z,
- Fig. 13: eine Draufsicht auf die Füllstreifenversatzerzeugerstation,
- Fig. 14: den Gegenstand nach Fig. 13 in Seitenansicht,
- Fig. 15: den Gegenstand nach Fig. 14 aus Richtung des Pfeiles B,
- Fig. 16: einen Schnitt A-B durch den Gegenstand nach Fig. 14 und
- Fig. 17: teilweise ein Sandwichelement in Explosivdarstellung.

In den Figuren ist eine Anlage zum ausgerichteten Zuführen von Füllstreifen 1 aus Dämmaterial für die Fertigung von Sandwichelementen 2 dargestellt, welche im wesentlichen aus Deckschichten 3 und einem Füllstreifenkern 4 bestehen. Die Anlage weist einen Füllstreifenzuförderer 5 und einen Füllstreifenabförderer 6 auf. Vor dem Füllstreifenzuförderer 5 befindet sich eine Vielblattsäge 7 mit einer Auflagerollenbahn 8. In der Vielblattsäge 7 wird ein Dämmaterialstrang aus Isoliermaterial in Füllstreifen 1 geschnitten, wobei die Breite der Füllstreifen 1 nach deren Zusammenführung der Streifenhöhe und folglich der Füllstreifenkerndicke der zu produzierenden Sandwichelemente 2 entspricht. In Abhängigkeit von der zu produzierenden Füllstreifenhöhe bzw. Füllstreifenkerndicke lassen sich unterschiedliche Sägeblattabstände einstellen. Zwischen dem Füllstreifenzuförderer 5 und dem Füllstreifenabförderer 6 ist ein Selektierförderer 9 zwischengeschaltet. Der Selektierförderer 9 weist umlaufende Fächer 10 zur Aufnahme einzelner Füllstreifen 1 auf, wobei jedes Fach 10 am Fördereranfang zum 90°-Hochschwenken eines in Horizontallage antransportierten Füllstreifens 1 in Vertikalposition eingerichtet ist. Unterhalb des Selektierförderers 9 befindet sich ein Hubrollenförderer 11 mit orthogonal zur Laufrichtung des Selektierförderers 9 angeordneten und über die Fachbodenebene im Obertrum des Selektierförderers 9 anhebbaren Transportrollen 12, welche bei stillstehendem Selektierförderer 9 die in seinen Fächern 10 befindlichen Füllstreifen 1 aufnehmen und in Richtung auf den Füllstreifenabförderer 6 abtransportieren. Die Fächer 10 des Selektierförderers 9 sind von Fachwänden 13 gebildet, die an beidseitig des Selektierförderers 9 umlaufenden und angetriebenen Kettensträngen 14 angeschlossen sind und sich im Übergangsbereich von dem Untertrum in das Obertrum unter Aufnahme der Füllstreifen 1 aufrichten. Dem Selektierförderer 9 sind zwei oder mehrere Riemenförderer 15 mit derart aufeinander abstimmbaren Fördergeschwindigkeiten vorgeordnet, daß der letzte Riemenförderer 15a vor dem Selektierförderer 9 die in Querlage befindlichen Füllstreifen 1 mit gleichem Abstand von Vorderkante zu Vorderkante dem Selektierförderer 9 bzw. seinen Fächern 10 im Übergangsbereich vom Untertrum zum Obertrum zuliefert. Im Übergabebereich zwischen dem letzten 15a und vorletzten Riemenförderer 15b sind ein oder mehrere in vorgegebenen Abständen zueinander angeordnete gegen die Förderebene niederfahrbare Anschläge 16 vorgesehen. Bei niedergefahrenen Anschlägen 16 wird eine für das nächste Selektieren und Beschicken des Selektierförderers 9 ausreichende Anzahl von Füllstreifen 1 in ausgerichteter Horizontal- und Querlage dicht bei dicht aufgestaut. Die Anschläge 16 sind mittels Zylinderkolbenanordnungen 17 niederfahrbar und in Ausgangsstellung hochfahrbar. Die Zylinderkolbenanordnungen 17 sind auf einer die Riemenförderer 15a, 15b überbrückenden Traverse 18 angeordnet. Oberhalb des letzten Riemenförderers 15a sind vor dem Selektierförderer 9 ein oder mehrere in vorgegebenen Abständen voneinander angeordnete Oberdruckförderer 19 installiert, welche die Füllstreifen zum verschiebefreien Abtransport und Übergeben an den Selektierförderer 9 gegen den Riemenförderer 15a niederdrücken. Die Anschläge 16 sind in den Bereichen zwischen den Oberdruckförderern 19 angeordnet.

Zwischen dem Füllstreifenzuförderer 5 und den rechtwinklig dazu angeordneten Riemenförderern 15 ist eine Winkelstation 20 zwischengeschaltet. Die Winkelstation 20 weist in Verlängerung des Füllstreifenzuförderers 5 eine Rollenbahn 21 und einen Hubrechen 22 mit zwischen den Rollen 23 der Rollenbahn 21 heb- und senkbaren Auflagerprofilen 24 für antransportierte Füllstreifen 1 auf. Oberhalb der Winkelstation 20 ist ein Abschiebeförderer 25 mit einem oder mehreren in Richtung auf die sich an die Winkelstation 20 anschließenden Riemenförderer 15 umlaufenden Schiebern 26 vorgesehen, welche die bei angehobenem Hubrechen 22 auf den Auflagerprofilen 24 aufliegenden Füllstreifen 1 an den nächsten Riemenförderer 15c abgeben. Nach dem Ausführungsbeispiel weist der Abschiebeförderer 25 zwei um 180° versetzte Schieber 26 auf.

Dem Selektierförderer 9 ist eine Füllstreifenversatzerzeugerstation 27 zum Erzeugen eines vorgegebenen Versatzes zwischen den Füllstreifen 1 benachbarter Füllstreifenstränge nachgeordnet. Die aus dem Selektierförderer 9 in Ausrichtung abtransportierten Füllstreifen 1 sind auf Riemenbahnen eines oder mehrerer hintereinander angeordneter Riemenförderer 28 am Ende des letzten Riemenförderers 28a gegen niederfahrbare und hochfahrbare sowie wechselweise um ein vorgegebenes Maß zueinander versetzte Anschläge 29 unter entsprechender Versatzbildung vorfahrbar. Im Hinterkantenbereich einer gleichsam eine Füllstreifenplatte bildenden Füllstreifencharge ist eine den betreffenden Riemenförderer 28 überbrückende Meßschranke, z. B. Lichtschranke 30, angeordnet. Mittels dieser Lichtschranke 30 ist bei zum Endlosstrang aufgefahrenen Füllstreifen ein ausreichender oder unzureichender Füllstreifenversatz erfaßbar. Bei unzureichendem Versatz ist z. B. mittels eines Portalgreifers ein Korrekturstreifenabschnitt in dem betreffenden Füllstreifenstrang eingesetzt. Die Anschläge 29 sind mittels beidseitig des letzten Riemenförderers 28a angeordneter Zylinderkolbenanordnungen 31 und eines von den Zylinderkolbenanordnungen 31 betätigbaren und den Riemenförderer 28a überbrückenden Schwenkhebelgestänges 32 niederfahrbar und hochfahrbar bzw. ab- und aufschwenkbar. Den Riemenbahnen der Riemenförderer 28 sind Trenn- und Führungswände 33 für die Füllstreifen 1 zugeordnet. Die Trenn- und Führungswände 33 sind über den Riemenförderern 28 an Traversen 34 in Riemenbahnlängsrichtung abgehängt und breitenverstellbar.

An den letzten Riemenförderer 28a schließt sich ein Bandförderer 35 mit auf eine vorgegebene oder einstellbare Breite B konisch zulaufenden Seitenwänden 36 oder Seitenwandförderern an. Zwischen dem Bandförderer 35 und dem Füllstreifenabförderer 6 ist eine Frässtation 37 mit die zusammengeführte Füllstreifenplatte beidseitig bzw. auf ihrer Außenseite auf ein vorgegebenes Breitenmaß bearbeitenden Fräsaggregaten 38 angeordnet.

Bei der beschriebenen Anlage sind die Geschwindigkeiten sämtlicher Förderer aufeinander abstimmbar und entsprechend getaktet.

## Patentansprüche

1. Anlage zum ausgerichteten Zuführen von Füllstreifen (1) aus Dämmaterial im Zuge der Fertigung von Sandwichelementen (2) aus im wesentlichen Deckschichten (3) und einem Füllstreifenkern (4), mit einem Füllstreifenzuförderer (5) und einem Füllstreifenabförderer (6), **dadurch gekennzeichnet, daß** zwischen dem Füllstreifenzuförderer (5) und dem Füllstreifenabförderer (6) ein Selektierförderer (9) zwischengeschaltet ist, daß der Selektierförderer umlaufende Fächer (10) zur Aufnahme einzelner Füllstreifen (1) aufweist und jedes Fach (10) am Fördereranfang zum 90°-Hochschwenken eines in Horizontallage antransportierten Füllstreifens (1) in Vertikalposition eingerichtet ist, und daß unterhalb des Selektierförderers (9) ein Hubrollenförderer (11) mit orthogonal zur Laufrichtung des Selektierförderers (9) angeordneten und über die Fachbodenebene im Obertrum des Selektierförderers (9) anhebbaren und angetriebenen Transportrollen (12) angeordnet ist, welche bei stillstehendem Selektierförderer (9) die in seinen Fächern (10) befindlichen Füllstreifen (1) aufnehmen und in Richtung auf den Füllstreifenabförderer (6) abtransportieren.

2. Anlage nach Anspruch 1, **dadurch gekennzeichnet, daß** die Fächer (10) des Selektierförderers (8) von Fachwänden (13) gebildet sind, die an beidseitig des Selektierförderers (9) umlaufenden und angetriebenen Kettensträngen (14) angeschlossen sind und sich im Übergangsbereich vom Untertrum ins Obertrum unter Aufnahme der Füllstreifen (1) aufrichten.

3. Anlage nach Anspruch 1 oder 2, **dadurch gekennzeichnet, daß** dem Selektierförderer (9) zwei oder mehr Riemenförderer (15) mit derart aufeinander abstimmbaren Fördergeschwindigkeiten vorgeordnet sind, daß der letzte Riemenförderer (15a) vor dem Selektierförderer (9) die in Querlage befindlichen Füllstreifen (1) mit gleichem Abstand von Vorderkante zu Vorderkante dem Selektierförderer (9) bzw. seinen Fächern (10) zuliefert.

4. Anlage nach einem der Ansprüche 1 bis 3, **dadurch gekennzeichnet, daß** im Übergabebereich zwischen dem letzten (15a) und vorletzten Riemenförderer (15b) ein oder mehrere in vorgegebenen Abständen voneinander angeordnete, gegen die Fördererebenen niederfahrbare Anschläge (16) vorgesehen sind, und daß bei niedergefahrenen Anschlägen (16) eine für das nächste Selektieren und Beschicken des Selektierförderers (9) ausreichende Anzahl von Füllstreifen (1) in ausgerichteter Horizontal- und Querlage dicht bei dicht aufgestaut sind.

5. Anlage nach einem der Ansprüche 1 bis 4, **dadurch gekennzeichnet, daß** die Anschläge (16) mittels Zylinderkolbenanordnungen (17) niederfahrbar und in Ausgangsstellung hochfahrbar sind, und daß die Zylinderkolbenanordnungen (17) auf einer den betreffenden Riemenförderer (15) überbrückenden Traverse (18) angeordnet sind.

6. Anlage nach einem der Ansprüche 1 bis 5, **dadurch gekennzeichnet, daß** oberhalb des letzten Riemenförderers (15a) vor dem Selektierförderer (9) ein oder mehrere in vorgegebenen Abständen voneinander angeordnete Oberdruckförderer installiert sind.

7. Anlage nach einem der Ansprüche 1 bis 6, **dadurch gekennzeichnet, daß** die Anschläge in den Bereichen zwischen den Oberdruckförderern (19) angeordnet sind.

8. Anlage nach einem der Ansprüche 1 bis 7, **dadurch gekennzeichnet, daß** zwischen dem Füllstreifenzuförderer (5) und den winklig dazu angeordneten Riemenförderern (15) eine Winkelstation (20) zwischengeschaltet ist, daß die Winkelstation (20) in Verlängerung des Füllstreifenzuförderers (5) eine Rollenbahn (21) und einen Hubrechen (22) mit zwischen den Rollen (23) der Rollenbahn (21) heb- und senkbaren Auflagerprofilen (24) für antransportierte Füllstreifen (1) aufweist, und daß oberhalb der Winkelstation (20) ein Abschiebeförderer (25) mit einem oder mehreren in Richtung auf die sich an die Winkelstation (20) anschließenden Riemenförderer (15) umlaufenden Schiebern (26) vorgesehen ist, welche die bei angehobenem Hubrechen (22) auf den Auflagerprofilen (24) aufliegenden Füllstreifen (1) an den nächsten Riemenförderer (15c) abgeben.

9. Anlage nach einem der Ansprüche 1 bis 8, **dadurch gekennzeichnet, daß** der Abschiebeförderer (25) zwei um 180° versetzte Schieber (26) aufweist.

10. Anlage nach einem der Ansprüche 1 bis 9, **dadurch gekennzeichnet, daß** dem Selektierförderer (9) eine Füllstreifenversatzerzeugerstation (27) zum Erzeugen eines vorgegebenen Versatzes zwischen den Füllstreifen (1) benachbarter Füllstreifenstränge nachgeordnet ist, wobei die aus dem Selektierförderer (9) in Ausrichtung abtransportierten auf Riemenbahnen eines oder mehrerer hintereinander angeordneter Riemenförderer (28) am Ende des letzten Riemenförderers (28a) gegen niederfahrbare sowie wechselweise um ein vorgegebenes Maß zueinander versetzte Anschläge (29) unter entsprechender Versatzbildung vorfahrbar sind.

11. Anlage nach einem der Ansprüche 1 bis 10, **dadurch gekennzeichnet, daß** im Hinterkantenbereich einer eine Füllstreifenplatte bildenden Füllstreifencharge eine den betreffenden Riemenförderer (28) überbrückende Meßschranke, angeordnet ist und mittels einer Sensorik, z. B. Lichtschranke (30), bei zum Endlosstrang aufgefahrenen Füllstreifen (1) ausreichender oder unzureichender Füllstreifenversatz erfaßbar ist, und daß bei unzureichendem Versatz mittels z. B. eines Portalgreifers ein Korrekturstreifenabschnitt in den betreffenden Füllstreifenstrang einsetzbar ist.

12. Anlage nach einem der Ansprüche 1 bis 11, **dadurch gekennzeichnet, daß** die Anschläge (29) mittels beidseitig des letzten Riemenförderers (28a) angeordneter Zylinderkolbenanordnungen (31) und eines von den Zylinderkolbenanordnungen (31) betätigbaren und den Riemenförderer (28a) überbrückenden Schwenkhebelgestänges (32) niederfahrbar und hochfahrbar sind.

13. Anlage nach einem der Ansprüche 1 bis 12, **dadurch gekennzeichnet, daß** den Riemenbahnen der Riemenförderer (28) Trenn- und Führungswände (33) für die Füllstreifen (1) zugeordnet sind.

14. Anlage nach einem der Ansprüche 1 bis 13, **dadurch gekennzeichnet, daß** die Trenn- und Führungswände (33) über den Riemenförderern (28) an Traversen (34) abgehängt und breitenverstellbar sind.

15. Anlage nach einem der Ansprüche 1 bis 14, **dadurch gekennzeichnet, daß** sich an den letzten Riemenförderer (28a) ein Bandförderer (35) mit auf eine vorgegebene oder einstellbare Breite B konisch zulaufenden Seitenwänden (36) oder Seitenwandförderern anschließt.

16. Anlage nach einem der Ansprüche 1 bis 15, **dadurch gekennzeichnet, daß** zwischen dem Bandförderer (35) und dem Füllstreifenabförderer (6) eine Frässtation (37) mit die zusammengeführten Füllstreifen (1) beidseitig bzw. auf deren Außenseite auf ein vorgegebenes Breitenmaß bearbeitenden Fräsaggregaten (38) angeordnet ist.

## Claims

1. An installation for the aligned feeding of filling strips (1) made of insulating material in the course of manufacturing sandwich elements (2) which essentially comprise facings (3) and a filling strip core (4), said installation comprising a filling strip feeder conveyor (5) and a filling strip discharge conveyor (6), **characterised in that** a selecting conveyor (9) is interposed between the filling strip feeder conveyor (5) and the filling strip discharge conveyor (6), that the selecting conveyor comprises circulating compartments (10) for receiving individual filling strips (1) and each compartment (10) is designed for swinging a filling strip (1), which is being conveyed in a horizontal position, upwards by 90° into a vertical position at the start of the conveyor, and that a lifting roller conveyor (11) is disposed under the selecting conveyor (9) and comprises driven conveying rollers (12) which are disposed orthogonally to the direction of travel of the selecting conveyor (9), which conveying rollers can be raised above the basal plane of the compartments in the upper run of the selecting conveyor (9), and which when the selecting conveyor (9) is at a standstill receive the filling strips (1) situated in the compartments (10) thereof and convey them away towards the filling strip discharge conveyor (6).

2. An installation according to claim 1, **characterised in that** the compartments (10) of the selecting conveyor (8) are formed by compartment walls (13), which are attached to driven chain runs (14) which circulate on both sides of the selecting conveyor (9), and which are set upright and receive the filling strips (1) in the transition region from the lower run to the upper run.

3. An installation according to claims 1 or 2, **characterised in that** two or more belt conveyors (15) are disposed upstream of the selecting conveyor (9) and have conveying speeds which can be matched to each other in such a way that the last belt conveyor (15a) in front of the selecting conveyor (9) delivers the transversely situated filling strips (1), with identical spacings from front edge to front edge, to the selecting conveyor (9) or to the compartments (10) thereof.

4. An installation according to any one of claims 1 to 3, **characterised in that** one or more stops (16) which are disposed at predetermined spacings from each other and which can be lowered towards the conveyor planes are provided in the transition region between the last (15a) and the penultimate belt conveyor (15b), and that when the stops (16) are lowered a number of filling strips (1) which is sufficient for the next selection by and loading of the selecting conveyor (9) is banked up with the filling strips close to each other and in an aligned horizontal and transverse position.

5. An installation according to any one of claims 1 to 4, **characterised in that** the stops (16) can be lowered and can be raised into their initial position by means of cylinder-and-piston arrangements (17), and that the cylinder-and-piston arrangements (17) are disposed on a crosshead (18) which bridges the respective belt conveyor (15).

6. An installation according to any one of claims 1 to 5, **characterised in that** one or more top force conveyors are installed at predetermined spacings from each other above the last belt conveyor (15a) in front of the selecting conveyor (9).

7. An installation according to any one of claims 1 to 6, **characterised in that** the stops are disposed in the regions between the top force conveyors (19).

8. An installation according to any one of claims 1 to 7, **characterised in that** an angle station (20) is interposed between the filling strip feeder conveyor (5) and the belt conveyors (15) which are disposed at an angle thereto, that the angle station (20) comprises, as an extension of the filling strip feeder conveyor (5), a roller conveyor (21) and a lifting rake (22), with supporting profiles (24) for filling strips (1) which are conveyed thereto, which supporting profiles can be raised and lowered between the rollers (23) of the roller conveyor (21), and that a push-off conveyor (25) is provided above the angle station (20) and comprises one or more pushers (26) which circulate towards the belt conveyor (15) which adjoins the angle station (20) and which when the lifting rake (22) is raised discharge the filling strips (1) resting on the supporting profiles (24) on to the next belt conveyor (15c).

9. An installation according to any one of claims 1 to 8, **characterised in that** the push-off conveyor (25) comprises two pushers (26) which are offset by 180°.

10. An installation according to any one of claims 1 to 9, **characterised in that** a filling strip offset production station (27) for producing a predetermined offset between the filling strips (1) of adjacent runs of filling strips is disposed downstream of the selecting conveyor (9), wherein the filling strips which are discharged in alignment from the selecting conveyor (9) on to belt runs of one or more belt conveyors (28) disposed in succession can be advanced at the end of the last belt conveyor (28a), with the formation of a corresponding offset, towards stops (29) which can be lowered and which are alternately offset by a predetermined extent in relation to each other.

11. An installation according to any one of claims 1 to 10, **characterised in that** a test barrier which bridges the respective belt conveyor (28) is disposed in the rear edge region of a filling strip batch which forms a filling strip sheet, and sufficient or insufficient filling strip offset for filling strips which are advanced in a continuous run can be determined by means of a sensor arrangement, e.g. a photoelectric barrier (30), and that when there is insufficient offset a correction strip section can be inserted, by means of an overhead gripper for example, in the respective filling strip run.

12. An installation according to any one of claims 1 to 11, **characterised in that** the stops (29) can be raised and lowered by means of cylinder-and-piston arrangements (31) disposed on both sides of the last belt conveyor (28a) and by means of a swivelling lever assembly (32) which bridges the belt conveyor (28a) and which can be operated by one of the cylinder-and-piston arrangements (31).

13. An installation according to any one of claims 1 to 12, **characterised in that** separating and guide walls (33) for the filling strips (1) are associated with the belt runs of the belt conveyors (28).

14. An installation according to any one of claims 1 to 13, **characterised in that** the separating and guide walls (33) are suspended above the belt conveyors (28) on crossheads (34) and are width-adjustable.

15. An installation according to any one of claims 1 to 14, **characterised in that** a belt conveyor (35) comprising sidewalls (36) or sidewall conveyors which taper to a predetermined or adjustable width B adjoins the last belt conveyor (28a).

16. An installation according to any one of claims 1 to 15, **characterised in that** a milling station (37), which comprises milling units (38) which machine the brought-together filling strips (1) to a predetermined width on both sides or on the outer face thereof, is disposed between the belt conveyor (35) and the filling strip discharge conveyor (6).

## Revendications

1. Installation pour l'acheminement en alignement de bandes de remplissage (1) en matériau isolant au cours de la fabrication d'éléments en sandwich (2) consistant essentiellement en couches de couverture (3) et en un noyau de bande de remplissage (4), avec un alimentateur en bandes de remplissage (5) et un évacuateur de bandes de remplissage (6), **caractérisée en ce qu'**entre l'alimentateur en bandes de remplissage (6) et l'évacuateur de bandes de remplissage (6) est intercalé un convoyeur-sélecteur (9), que le convoyeur-sélecteur présente des cases rotatives (10) destinées à recevoir les bandes de remplissage individuelles (1) et que chaque case (10) est orientée en position horizontale au début du convoyage en position verticale pour pivoter en hauteur à 90° d'une bande de remplissage (1) transportée, et qu'en dessous du convoyeur-sélecteur (9) est disposé un convoyeur à rouleaux élévateurs (11) avec des rouleaux de transport (12) disposés de manière orthogonale par rapport au sens de course du convoyeur-sélecteur (9) et pouvant être levés et entraînés au dessus du plan du fond dans la galerie supérieure du convoyeur-sélecteur (9) qui, lorsque le convoyeur-sélecteur (9) est à l'arrêt, récupèrent les bandes de remplissage (1) se trouvant dans ses cases (10) et les évacuent en direction de l'évacuateu de bandes de remplissage (6).

2. Installation selon la revendication 1, **caractérisée en ce que** les cases (10) du convoyeur-sélecteur (8) sont constituées de cloisons (13) qui sont connectées à des cordons de chaînes (14) tournant des deux côtés du convoyeur-sélecteur (9) et motorisés et s'élèvent dans la zone de transition de la galerie inférieure vers la galerie supérieure en emportant les bandes de remplissage (1).

3. Installation selon la revendication 1 ou 2, **caractérisée en ce qu'**en amont du convoyeur-sélecteur (9) sont disposés deux convoyeurs à courroie (15) ou plus avec des vitesses de convoyage définissables l'une en fonction de l'autre de manière à ce que le dernier convoyeur à courroie (15a) délivre à l'avant du convoyeur-sélecteur (9) les bandes de remplissage (1) se trouvant en position transversale, avec le même intervalle d'arête frontale à arête frontale, au convoyeur-sélecteur (9) ou à ses cases (10).

4. Installation selon une des revendications 1 à 3, **caractérisée en ce que**, dans la zone de transition entre le dernier (15a) et l'avant-dernier (15b) convoyeur à courroie, sont prévues une ou plusieurs butées (16) disposées à intervalles prédéfinis et pouvant être déplacées vers le bas contre les plans de convoyage et que, lorsque les butées (16) sont déplacées vers le bas, un nombre suffisant de bandes de remplissage (1) pour la prochaine sélection et l'alimentation du convoyeur-sélecteur (9) sont refoulées serrées les unes contre les autres en position alignée horizontale et transversale.

5. Installation selon une des revendications 1 à 4, **caractérisée en ce que** les butées (16) peuvent être déplacées vers le bas et vers le haut en position de sortie au moyen d'agencements de pistons cylindriques (17) et que les agencements de pistons cylindriques (17) sont installés sur une traverse (18) enjambant le convoyeur à courroie (15) concerné.

6. Installation selon une des revendications 1 à 5, **caractérisée en ce qu'**au dessus du dernier convoyeur à courroie (15a), en amont du convoyeur-sélecteur (9), un ou plusieurs convoyeurs à forte pression disposés les uns par rapport aux autres à des intervalles prédéfinis sont installés.

7. Installation selon une des revendications 1 à 6, **caractérisée en ce que** les butées sont disposées dans les zones entre les convoyeurs à forte pression (19).

8. Installation selon une des revendications 1 à 7, **caractérisée en ce qu'**entre l'alimentateur en bandes de remplissage (5) et les convoyeurs à courroie (15) disposés en angle par rapport à celui-ci, une station d'angle (20) est intercalée, que la station d'angle (20) présente, dans le prolongement de l'alimentateur en bandes de remplissage (5), une bande convoyeuse à rouleaux (21) et une fourchette élévatrice (22) avec des profils supports (24) pouvant être levés et baissés entre les rouleaux (23) de la bande convoyeuse à rouleaux (21) pour les bandes de remplissage (1) acheminées et qu'au dessus de la station d'angle (20), un élévateur (25) avec un ou plusieurs chariots (26) tournant dans le sens des convoyeurs à courroie (15) se rattachant à la station d'angle (20) qui, lorsque la fourchette élévatrice (22) est levée, déposent les bandes de remplissage (1) reposant sur les profils supports (24) sur le prochain convoyeur à courroie (15c).

9. Installation selon une des revendications 1 à 8, **caractérisée en ce que** l'élévateur (25) présente deux chariots (26) décalés de 180°.

10. Installation selon une des revendications 1 à 9, **caractérisée en ce qu'**est associée au convoyeur-sélecteur (9) une station de décalage des bandes de remplissage (27) pour créer un décalage prédéfini entre les bandes de remplissage (1) des cordons de bandes de remplissage voisins, celles étant évacuées du convoyeur-sélecteur (9) en alignement sur des bandes à courroie d'un ou plusieurs convoyeurs à courroie (28) disposés l'un derrière l'autre au bout du dernier convoyeur à courroie (28a) pouvant être avancées contre des butées (29) pouvant être déplacées vers le bas ainsi que décalées au choix les unes par rapport aux autres dans une mesure prédéfinie en formant un décalage correspondant.

11. Installation selon une des revendications 1 à 10, **caractérisée en ce que**, dans la zone de l'arête postérieure d'une charge de bandes de remplissage formant une plaque de bandes de remplissage, une barrière de mesure enjambant le convoyeur à courroie (28) concerné est disposée et qu'au moyen d'un système de capteur, par exemple une barrière lumineuse (30), lorsque les bandes de remplissage (1) sont avancées vers le cordon sans fin, on peut détecter si le décalage des bandes de remplissage est suffisant ou insuffisant et, qu'en cas de décalage insuffisant, une section de bande corrective peut être insérée dans le cordon de bandes de remplissage concerné au moyen par exemple d'un mors à l'entrée.

12. Installation selon une des revendications 1 à 11, **caractérisée en ce que** les butées (29) peuvent être déplacées vers le bas et vers le haut au moyen d'agencements à pistons cylindriques (31) disposés des deux côtés du dernier convoyeur à courroie (28a) et d'une barre à levier pivotant (32) actionnable par les agencements de pistons cylindriques (31) et enjambant le convoyeur à courroie (28a).

13. Installation selon une des revendications 1 à 12, **caractérisée en qu**'aux bandes à courroie des convoyeurs à courroie (28) sont associées des cloisons de séparation et de guidage (33) pour les bandes de remplissage (1).

14. Installation selon une des revendications 1 à 13, **caractérisée en ce que** les cloisons de séparation et de guidage (33) sont décrochées au dessus des convoyeurs à courroie (28) sur des traverses (34) et peuvent être déplacées en largeur.

15. Installation selon une des revendications 1 à 14, **caractérisée en ce qu'**un convoyeur à bande (35) avec des cloisons latérales (36) rejoignant en cône une largeur prédéfinie ou réglable B ou des convoyeurs de cloison latérale se raccorde au dernier convoyeur à courroie (28a).

16. Installation selon une des revendications 1 à 15, **caractérisée en ce qu'**entre le convoyeur à bande (35) et l'évacuateur de bandes de remplissage (6), une station de fraisage (37) avec des agrégats de fraisage (38) usinant les bandes de remplissage (1) introduites ensemble des deux côtés ou sur leur face extérieure à une cote de largeur prédéfinie est installée.
